# EUROPEAN PATENT SPECIFICATION

(11) **EP 2 554 498 B1**
(45) Date of publication and mention of the grant of the patent: **05.10.2016**
(21) Application number: 11425218.2
(22) Date of filing: 05.08.2011
(51) Int. Cl.: B65B 23/14, B65B 35/44, B65G 17/32, B65G 17/46, B65G 37/00

(54) **METHOD AND RELATED APPARATUS FOR FEEDING A PACKAGING MACHINE WITH GROUPS OF THIN SHAPED FOOD PRODUCTS**
VERFAHREN UND VORRICHTUNG ZUM ZUFÜHREN VON GRUPPEN AUS DÜNNEN NAHRUNGSMITTELN ZU EINER VERPACKUNGSMASCHINE
MÉTHODE ET APPAREIL POUR ALIMENTER UNE MACHINE DE CONDITIONNEMENT AVEC DES GROUPES DE PRODUITS ALIMENTAIRES FORMÉS MINCES

(43) Date of publication of application: 06.02.2013
(73) Proprietor: Barilla G. e R. Fratelli S.p.A., 43100 Parma (IT)
(72) Inventor: Marazzi, Giorgio, 43100 Parma (IT); Canepari, Luca, 43100 Parma (IT)
(74) Representative: Ferreccio, Rinaldo

(56) References cited:
- EP-A1- 0 551 613
- FR-A1- 2 951 444
- GB-A- 2 098 158
- GB-A- 2 342 908
- US-A- 5 176 244
- US-A- 5 960 927

## Description

### Field of application

The present invention concerns the technological field of automated plants, with particular reference to automated plants for packaging products used in the food industry.

In this case, the present invention concerns a method and related apparatus for feeding a packaging machine with thin-shaped food products.

### Prior art

As known, the food industry has most of the production and subsequent packaging of products intended for sale carried out by highly automated plants.

In making said plants, an aspect often of critical importance is the feeding of the finished food products to the packaging machines that make the first protective enclosure. In this step, indeed, the food products, which come out sometimes in a disorganised manner from the production plants, must be oriented and grouped together according to predefined ways to allow the packaging operation.

In particular, thin-shaped products are often stacked on top of one another to form an ordered stack, which is then sealed inside a suitable enclosure.

Examples of this are thin-shaped elongated sweet products, such as biscuits sold on the market under the trademark *`Pavesini'.*

In feeding systems currently known, such biscuits are stacked by placing them on top of one another at the end of a conveyor belt, after which a group of biscuits in a predetermined number is picked up to be transported to the packaging machine.

Such systems, whilst substantially meeting the requirements of the industry, nevertheless do have some drawbacks.

Firstly, it should be noted that some oven-baked products, including the aforementioned *`Pavesini'* biscuits, have a slightly arched shape and a thickness that is not perfectly uniform, given that the production process comprises a leavening step. Such imperfections can jeopardise the stability of the stack in the course of the transfer to the packaging machine, so that the automated system is frequently unable to transfer the predetermined group of biscuits to the packaging machine with the required alignment.

A second problem derives from the presence of garnish on the food product, like for example crystal sugar, which in the process of transferring to the packaging machine can detach from the main product, resulting in a residue of sugar grains that accumulates on the belts of the apparatus and that requires continuous maintenance for its periodical removal in order to avoid jamming of the gears used to move the belts.

A different type of feeding system for biscuits is disclosed in GB 2 098 158.

The purpose of the present invention is to provide an apparatus and a method having characteristics such as to satisfy the aforementioned requirements and at the same time to avoid the aforementioned drawbacks with reference to the prior art.

### Summary of the invention

This objective is accomplished by an apparatus for feeding a packaging machine with groups of thin-shaped food products, in accordance with claim 1 of the present invention.

The present invention uses respective paddle conveyors to rotate the food products in passing from a plurality of first transportation lines to a common second transportation line. In this way, the group of products that is made to advance from the second transportation line is formed from a plurality of adjacent products, arranged vertically and laid on the side. This group thus obtained is stabler with respect to the stack of food products obtained with apparatuses of the prior art, and it can thus be easily fed to the packaging machine with very low waste.

The present invention can easily be realized by a drive belt to which at least one paddle conveyor is fixedly associated.

In particular, said drive belt can be arranged to drive the paddle conveyor belt along a closed path comprising an ascending section, an upper horizontal section, a descending section and a lower horizontal section.

It should be noted that during the movement of the paddle conveyor along the lower horizontal section, the paddles are upright and then arranged vertically so as to advantageously unload the solid residuals that have been disengaged from the thin-shaped food products that are moved by means of the apparatus, thus avoiding soiling the belt, which remains above the paddles in the lower horizontal section.

Moreover, the aforementioned descending section can be arranged at the point in which the products are received by the paddle conveyor, so as to allow the thin-shaped food products to be picked up easily.

Indeed, the paddles can be in the form of planar appendages able to be positioned horizontally downstream of said first transportation line so as to receive the food products coming from the first transportation line one by one onto each paddle.

In this case, the first transportation line can advantageously be arranged to orient said thin-shaped food products by aligning them longitudinally in an advancing direction x of said first transportation line, said thin-shaped appendages being longitudinally aligned with said advancing direction x at the point where they receive the products.

The paddle conveyors can comprise at least one first paddle conveyor belt associated with a first drive belt and at least one second paddle conveyor belt associated with a second drive belt, said drive belts being parallel and separately operated.

The apparatus can advantageously comprise a chute arranged to guide the falling of said groups of thin-shaped food products from the paddle conveyor to the unloading position.

The first transportation line can comprise a plurality of conveyor belts with speeds independent from one another, advantageously allowing control of the flow of thin-shaped food products fed to the paddle conveyor.

Again for the purpose of controlling the flow, the apparatus can comprise sensor devices arranged to check the correct positioning, orientation and spacing of the thin-shaped food products on the first transportation line.

It can also comprise reject devices to allow thin-shaped food products carried by the first transportation line to be rejected when the sensor devices detect errors in their positioning, orientation or spacing. The second transportation line can comprise driving rods arranged to thrust said groups along a sliding channel without the risk of altering their configuration along the way.

The aforementioned objective is also accomplished by a method for feeding a packaging machine with a group of thin-shaped food products, in accordance with claim 11 of the present invention. Further characteristics and advantages will become clearer from the following detailed description of a preferred but not exclusive embodiment of the present invention, with reference to the attached figures, given by way of a non-limiting example.

### Brief description of the drawings

Figure 1 is a perspective view of a non-claimed embodiment of the apparatus;
figure 2 is a plan view of the apparatus of figure 1;
figure 3 is a side view of the apparatus of figure 1, taken along the direction of the arrow A of figure 2;
figure 3A is a view of a detail of figure 3, according to a first position;
figure 3B is a view of a detail of figure 3, according to a second position;
figure 3C is a view of a detail of figure 3, according to a third position;

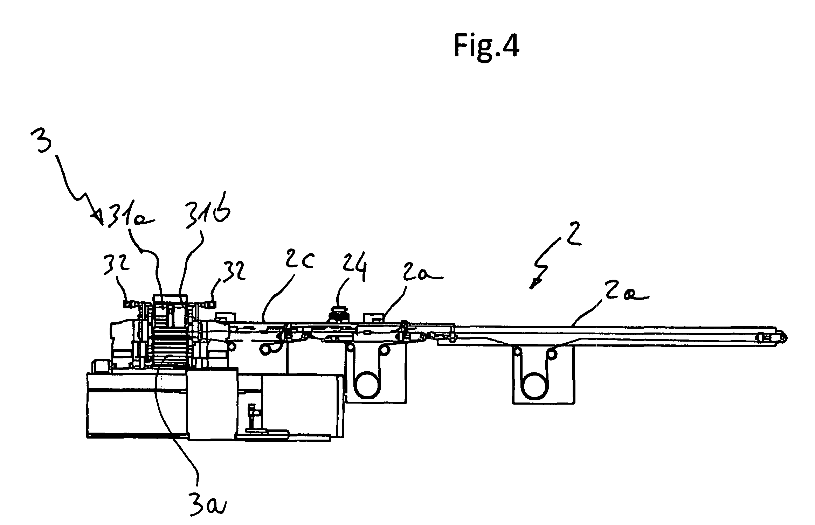

figure 4 is a side view of the apparatus of figure 1, taken along the direction of the arrow B of figure 2;
figure 5 is a view of a detail of the apparatus of figure 1, taken according to the arrow C of figure 2;
figure 6 is a plan view of a packaging plant comprising two apparatuses according to figure 1 and the present invention.

### Detailed description

With reference to the aforementioned figures, reference numeral 1 globally indicates an apparatus for feeding groups 100 of thin-shaped food products 100a (hereafter identified simply by the term product, for the sake of brevity) to a packaging machine, the latter not shown.

In the example the products 100a are in the form of biscuits, having an elongated and substantially flat shape, of the type sold on the market under the trade name *'Pavesini'.* Nevertheless, the present invention can apply to any thin-shaped food product, an expression by which a food product of any shape is intended, provided that it has two opposite faces separated by a thickness that is limited with respect to the linear dimensions of the faces themselves, so as to allow the packaging of a group of products stacked in the direction of the thickness.

The apparatus 1, along general lines, comprises a first transportation line 2 that carries the products 100a from an intake position 20 up to a pick-up position 21, a second transportation line 4 that carries the products 100a from an unloading position 40 to a feeding position 41, which corresponds in this case to the intake of a packaging machine, and finally a loading and tipping station 3 comprising at least one paddle conveyor 3a, 3b, 3a', 3b' that picks up the products 100a from the pick-up position 21 to then allow them to fall, organised into vertically arranged groups 100, in the unloading position 40 towards the second transportation line 4.

With reference to the illustrated example, the first transportation line 2 is in the form of three successive conveyor belts, an initial conveyor belt 2a, an intermediate conveyor belt 2b and a final conveyor belt 2c, respectively. The three conveyor belts 2a, 2b, 2c are aligned along the direction of forward motion x.

All three conveyor belts 2a, 2b, 2c comprise lateral dividers 22 that define a transportation channel whose width is proportioned to the width of the products 100a, which in the illustrated example have an oblong shape.

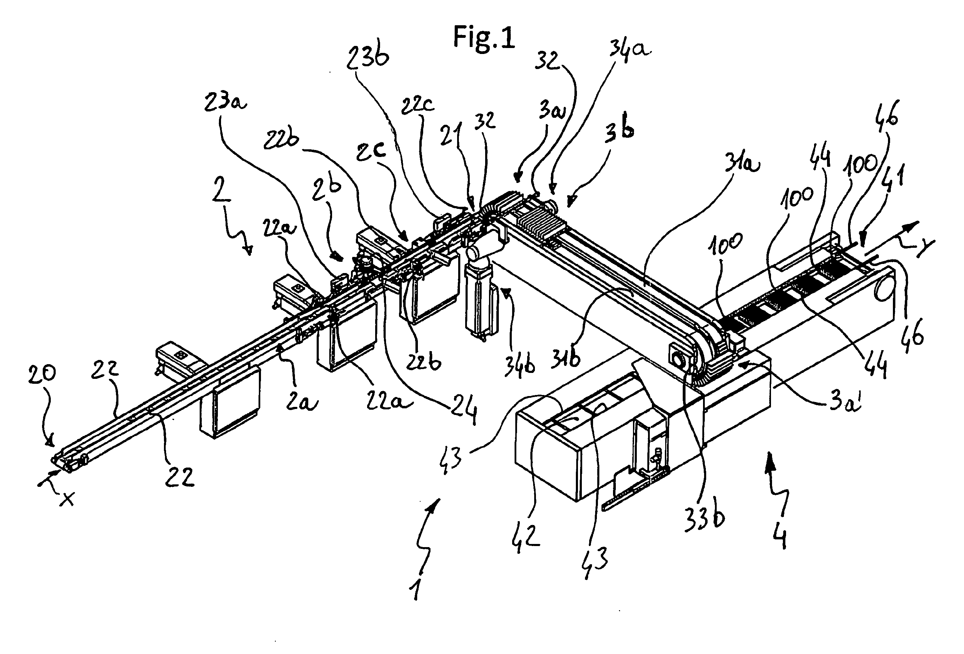

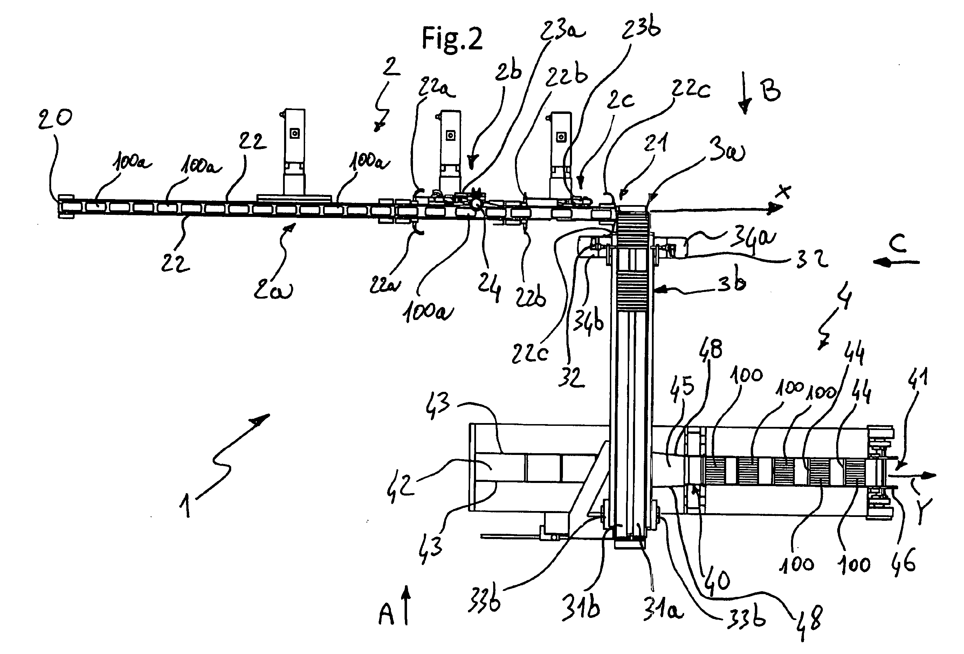

In practice, the products 100a are transported in a row, aligned with one another to advance along the direction x parallel to the longitudinal extension of the products 100a, as can be seen in figures 1 and 2.

The products 100a are thus placed in sequence on the initial conveyor belt 2a, arranged horizontally (i.e. with one of the faces resting on the belt) and spaced slightly apart.

From the initial belt 2a the products 100a pass to the intermediate belt 2b and then to the final one 2c, which carries them up to the aforementioned pick-up position 21, arranged just beyond the physical limit of the final conveyor belt 2c.

The speeds of the various conveyor belts can advantageously be varied so as to meet contingent requirements of the feeding operation. In particular, the final conveyor belt 2c is actuated with a higher speed with respect to the initial belt 2a so as to physically distance the products 100a arranged in succession and to give them the speed necessary to leave the conveyor belt 2c and reach the pick-up position 21. The intermediate belt 2b on the other hand performs the role of an intermediate buffer, allowing unforeseen situations on the transportation line 2 or in the successive steps to be tackled through speed variations.

The first transportation line 2 also comprises control means of the flow of products 100a, like for example sensor devices 22a, 22b, 22c and rejection devices 23a, 23b, 24.

In particular, the first transportation line 2 comprises a first sensor device 22a located at the intake of the intermediate conveyor belt 2b, a second sensor device 22b located at the intake of the final conveyor belt 2c and a third sensor device 22c located at the pick-up position 21.

The first sensor device 22a consists of two optical sensors arranged at different heights: the first is arranged to check the correct spacing between successive products 100a; the second checks that these products 100a do not exceed a certain height threshold, a situation that can occur in the case of pile-up or leaning of the product.

The second sensor device 22b foresees a single optical sensor aimed at checking the correct spacing of the products 100a at the intake for the final conveyor belt 2c; finally, the third sensor device 22c, again of the optical type, checks that the products 100a are correctly positioned on the paddle conveyors 3a, 3b, 3a', 3b' for picking up.

The rejection devices are of two types: blowing devices 23a, 23b intended to expel a single product 100a from the first transportation line 2 through a mechanical blowing action; and deviator devices 24 intended to temporarily interrupt the first transportation line by determining the expulsion of a series of consecutive products 100a.

In the illustrated embodiment, a first blowing device 23a acts on the intermediate conveyor belt 2b downstream of the first sensor device 22a, whereas a second blowing device 23b acts on the final conveyor belt 2c downstream of the second sensor device 22b. A deviator device 24, on the other hand, acts on the intermediate conveyor belt 2b downstream of the aforementioned first blowing device 23a.

Operatively, the action of blowing devices 23a, 23b is subordinated to the check carried out by the sensor devices 22a, 22b; in other words, the products 100a are rejected, from the intermediate conveyor belt 2b or from the final conveyor belt 2c, respectively, when it is found that they are not correctly arranged on the respective belts, i.e. when they are not horizontal and equally spaced apart.

The deviator device 24, which is in the form of a paddle fixedly connected to a vertical rotary cylinder and arranged to continuously intercept the flow of products 100a transiting on the intermediate conveyor belt 2b, is on the other hand activated when a stop occurs in the the subsequent loading and inverting station 3 .

Under the first transportation line 2 there is a reject collection system, not illustrated, which conveys the expelled food products onto a recovery conveyor belt.

In the embodiment described here, the loading and inverting station 3 comprises a first pair of paddle conveyors 3a,3a' and a second pair of paddle conveyors 3b,3b'. The paddle conveyors of each pair are respectively associated with a first drive belt 31a and with a second drive belt 31b, parallel to one another and wound on two coaxial pairs of rotary drums 33a, 33b arranged with their rotation axes horizontally. The drive belts 31a, 31b are then tensioned between said drums extending longitudinally between an upstream end close to the first transportation line 2 and a downstream end close to the second transportation line 4, in a forward direction that is perpendicular to the directions of forward motion of the first and second transportation line 2, 4.

Two electric motors 34a, 34b, in this case brushless motors equipped with planetary reduction gear, are respectively associated with each pair of drums so as to be able to move one or the other of the drive belts 31a, 31 b separately.

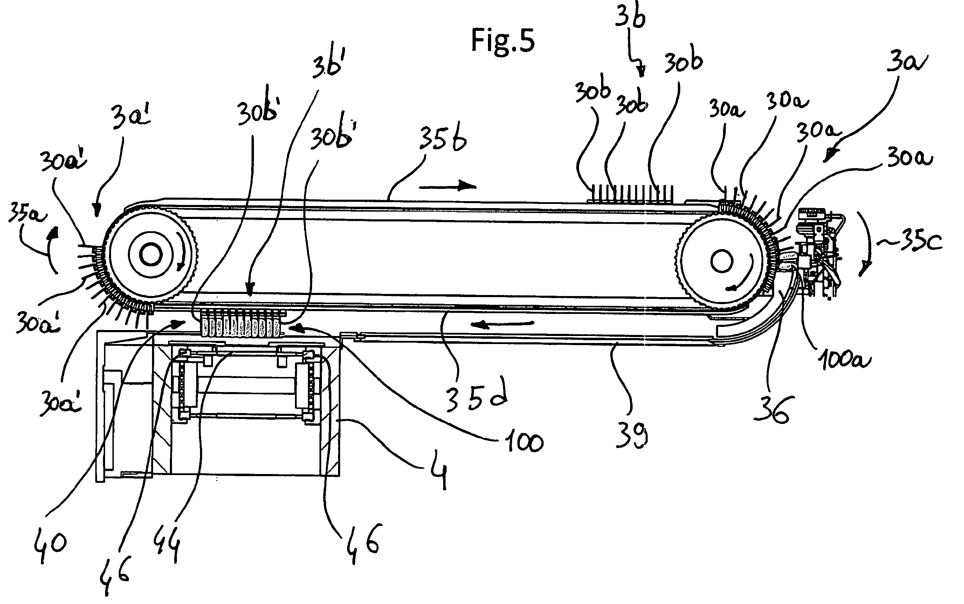

The paddle conveyors 3a, 3b, 3a', 3b', clearly visible in figure 5, comprise a plurality of paddles 30a, 30b arranged to pick up the products 100a. The paddles 30a, 30b, 30a', 30b' consist of thin-shaped appendages fixedly connected to the respective drive belt 31a, 31b, and following each other at a constant pitch along a section thereof. In particular, the thin-shaped appendages are removably anchored to respective blocks fixedly connected to the reference drive belt 31a, 31b. It is thus possible to add or remove appendages in order to vary the number of paddles 30a, 30b, 30a', 30b' for each conveyor belt 3a, 3b, 3a', 3b'. The two paddle conveyors 3a, 3b, 3a' 3b' of each pair are respectively associated with two opposite sections of the respective drive belt 31a, 31b.

The thin-shaped appendages forming the paddles extend projecting cantilevered laterally above the other parallel belt, so that the paddles 30a, 30b, 30a', 30b' of the two pairs of paddle conveyors 3a, 3b, 3a', 3b' are aligned with one another and are driven by the respective belts along the same drive path.

This drive path consists of an ascending section 35a, an upper horizontal section 35b, a descending section 35c and a lower horizontal section 35d. In the descending section 35c the paddles 30a, 30b, 30a', 30b' rotate by a total of 180° to go from the vertical upward-facing position - the position taken in the upper horizontal section 35b - to the downward-facing vertical position, this last latter position taken in the lower horizontal section 35d. During this rotation step the paddles assume a position in the pick-up area 21 where they are arranged horizontally, after a rotation by 90° with respect to the position they had all along the upper horizontal section 35b, so as to allow the products 100a coming from the first transportation line 2 to be picked up.

The function of the paddles 30a, 30b, 30a',30b', as will become clearer from the rest of the description, is to rotate the products 100a just received horizontally by the first transportation line 2 by 90° and drive them, in this new vertical position, towards the second transportation line 4. A single product 100a is located between two paddles, so that the distance between two consecutive paddles is proportioned to the thickness of the product 100a to be transported. For this reason, every paddle conveyor 3a, 3b, 3a', 3b' comprises a number of paddles 30a, 30b, 30a', 30b' that is one unit greater than the number of elements that make up the group 100 of products 100a to be packaged.

Moreover, each paddle 30a, 30b, 30a', 30b' is fixed to the drive belt 31a, 31b so as to be able to oscillate autonomously with respect to the remaining paddles of the paddle conveyor 3a, 3b, 3a', 3b'. This autonomous oscillation occurs with respect to an axis arranged in the attachment point to the belt 31a,31b, parallel to the direction of forward motion x of the products along the first transportation line 2.

In the illustrated example, every paddle conveyor 3a, 3b, 3a', 3b' comprises twelve paddles 30a, 30b, 30a', 30b' so as to be able to group together up to eleven products 100a.

The apparatus 1 foresees a fourth sensor device 32, arranged in the pick-up area 21 to check the correct positioning of the products 100a that are arranged between the paddles 30a, 30b, 30a', 30b' that receive them.

As stated above, the path of the paddle conveyors 3a, 3b, 3a', 3b' extends up to the end that is downstream of the final conveyor belt 2c; in particular, it is configured so that the paddles 30a, 30b, 30a', 30b', when they pass over this end, are in a horizontal position and define a physical continuation of the transportation plane as defined by the final conveyor belt 2c. Given this configuration, the products 100a pushed beyond the end downstream of the final conveyor belt 2c can be supported by the horizontal plane defined by the paddle that at that moment is located in the pick-up position 21, placed in effect in a horizontal position as an extension of the final conveyor belt 2c.

A fixed abutment plane 36, arranged at the opposite end of the pick-up position, i.e. on the side of the descending section 35c, on the opposite side to the one where the final conveyor belt 2c of the first transportation line 2 arrives, allows the products 100a to be stopped precisely above the single paddles 30a, 30b, 30a', 30b'.

When the third sensor device 22c detects the correct positioning of a product 100a above the paddle 30a, 30b, the respective drive belt 31a, 31b advances without stopping so as to position the next paddle in the pick-up area 21 to receive the subsequent product 100a.

The direction of movement transmitted by the drive belt 31a, 31 b to the paddle conveyor 3a, 3b, 3a', 3b' is such that every individual paddle 30a, 30b, 30a', 30b', once the product 100a has been received, which occurs when the paddle 30a, 30b, 30a', 30b' is in a horizontal position in the pick-up area 21, in the descending section 35c, rotates downwards along the descending section 35c for a further section of a total of 90°.

Once this rotation by 90° is complete, the paddle conveyor 3a, 3b, 3a', 3b' proceeds along the lower horizontal section 35d, with the paddles 30a, 30b, 30a', 30b' arranged vertically downwards, just as the group of products 100 is located in vertical position with their longer side, in the example of oblong products, arranged horizontally.

The drive belt 31a, 31b then causes the paddle conveyor 3a, 3b, 3a', 3b' to tip up immediately after having picked up the products 100a.

The tipping up from the horizontal position to the vertical one with consequent passage along the lower horizontal section 35d, prevents the belts from getting dirty, which means less maintenance thereof, since the possible sugar present on the products falls downwards where there are no elements that form part of the transportation.

Retaining means 39, arranged so as to prevent the group of products 100 carried by the paddle conveyor 3a, 3b, 3a', 3b' from falling off, when the latter passes along the descending section 35c and the lower horizontal section 35d, are suitably foreseen in the apparatus 1 of the present invention.

In the example, such retaining means 39 are in the form of stainless steel rods arranged along the path followed by the group of products 100, at such a distance that the products are prevented from falling off the paddle conveyor 3a, 3b, 3a', 3b'.

In other words, in the absence of such retaining means, the products 100a carried by the paddle conveyor 3a, 3b, 3a', 3b' would fall down, into the lower horizontal section 35d, but the rods arranged in succession along the path that extends from the pick-up area 21 to the unloading area 40 prevents this from happening.

Of course, any other device can be used as an alternative to the plurality of rods, provided that it prevents the products 100a from falling off the paddle conveyor 3a, 3b, 3a', 3b'.

Downstream of this lower horizontal section 35d, i.e. near the ascending section 35a, the apparatus 1 foresees extraction means 37 of the group of products arranged so as to extract the group of products 100 from the paddle conveyor 3a, 3b, 3a', 3b' when the paddle conveyor 3a, 3b, 3a', 3b' is in unloading position 40.

Such extraction means 37 comprise a linear actuator that in the illustrated example is in the form of a comb thruster arranged at the second transportation line 4 so as to extract the group of products 100 from the paddle conveyor 3a, 3b, 3a', 3b'.

This comb thruster 37 has a plurality of teeth that are spaced in such a manner as to arrange themselves between two consecutive paddles 30a, 30b, 30a', 30b' when it is in the extraction step of the products 100a.

In other words, when the paddle conveyor 3a, 3b, 3a', 3b' with its load of the group of products 100 arrives in the unloading area 40, the paddle conveyor 3a, 3b, 3a', 3b' stops and the comb thruster 37 is actuated to thrust the products 100a towards the second transportation line 4.

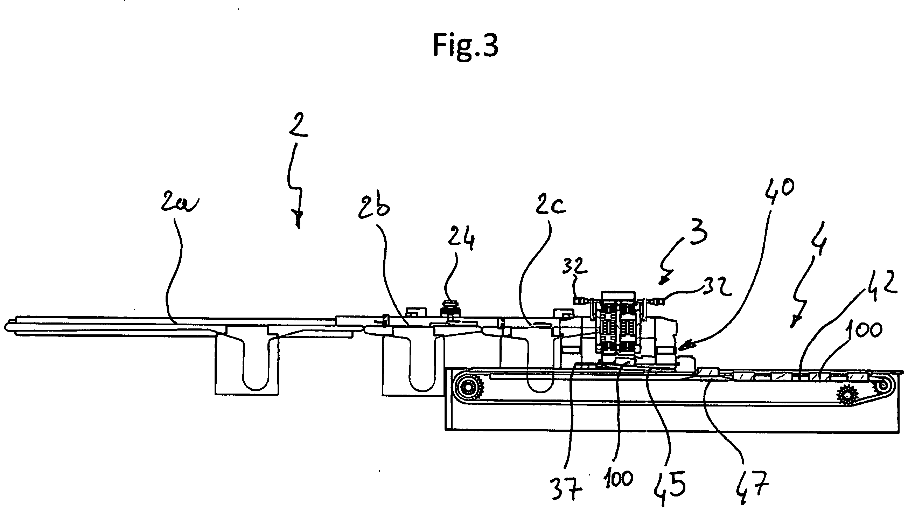

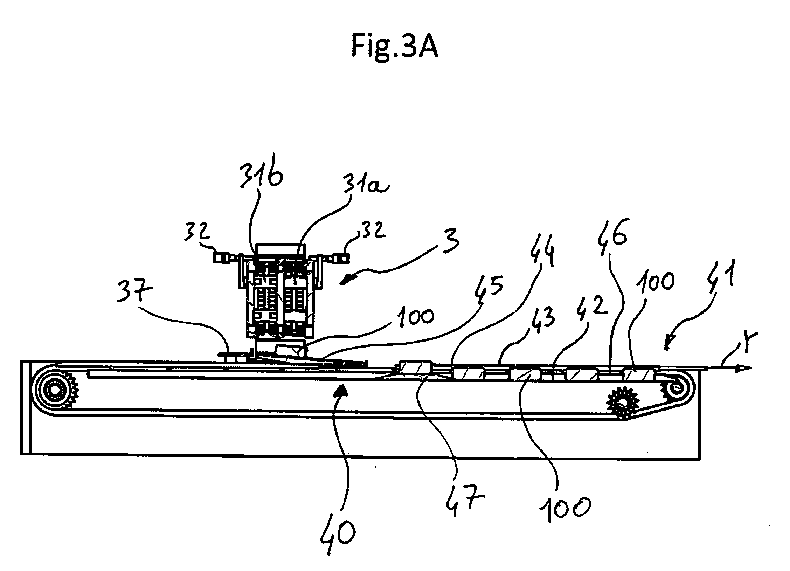

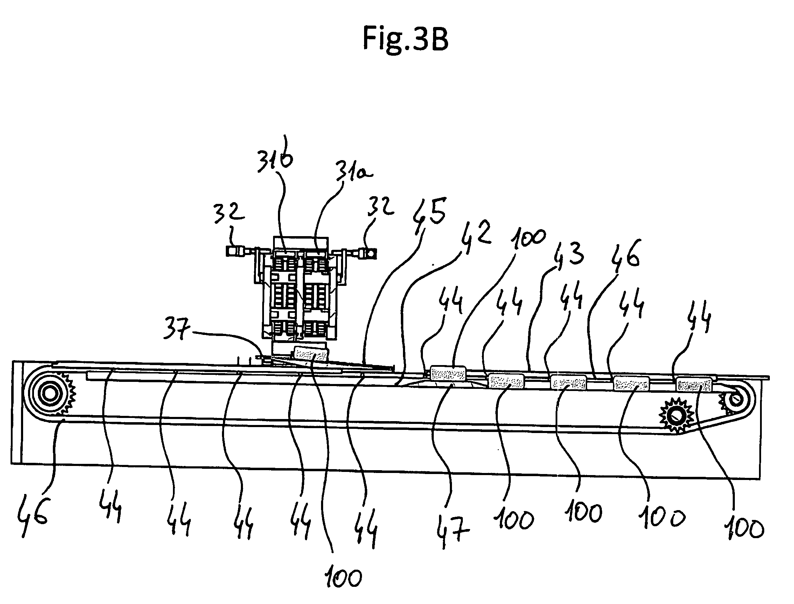

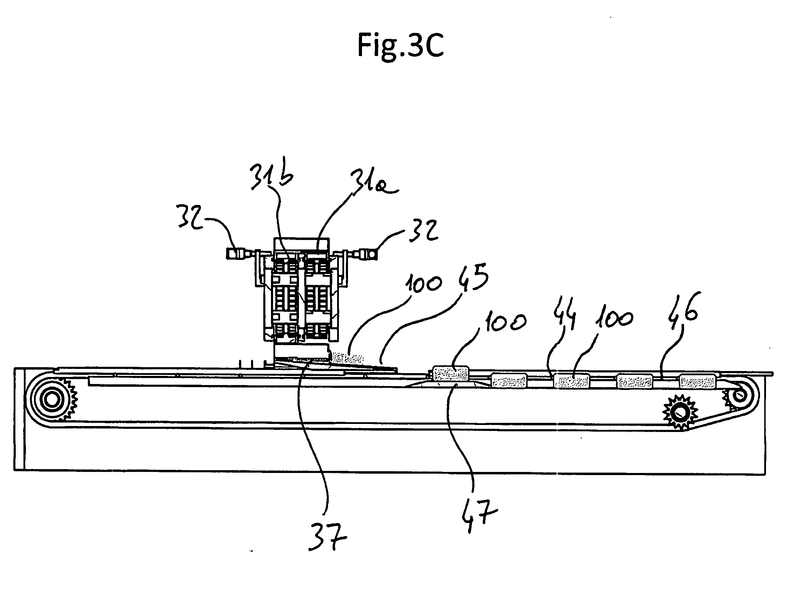

Figures 3A-3C illustrate three different positions of the thruster 37, in the various steps in which the thrusting of the group of products 100 occurs.

In order not to lose the configuration of the group of products 100 on the paddle conveyor 3a, 3b, 3a', 3b', in other words with the products arranged vertically alongside one another with the flat faces adjacent and the long side arranged downwards, there is a chute 45 that guides the products 100a falling from the paddle conveyor 3a, 3b, 3a', 3b' onto the second transportation line 4.

This chute 45 is further provided with two side walls 48 that keep the group of products 100 substantially compact, preventing the products 100a from losing their vertical arrangement.

The second transportation line 4 has a sliding channel 42 defined by containing side walls 43 and that extends longitudinally from the unloading position 40 to the feeding position 41 in the direction of the forward motion y parallel to the direction of forward motion x of the first transportation line 2. The bottom surface of the sliding channel 42 has a ridge 47 immediately downstream of the chute 45. Just above the bottom surface there is a plurality of transversal driving rods 44 equally spaced apart. These driving rods 44 are associated with moving belts 46 that promote the translation movement of the rods in the direction of forward motion y. In particular, the rods 44 are arranged parallel to one another and are actuated in a direction perpendicular to the longitudinal axis of the rods themselves, to thrust each group of products 100 along the sliding channel 42 towards the packaging machine.

Given the configuration of the apparatus and of the chute 45, the products 100a fall into the unloading position 40, and reach the hump 47 after having slid along the chute 45 in groups of product 100 compacted together. The products 100a that constitute the groups 100 are arranged vertically lengthwise, aligned in the direction of forward motion y and transversally adjacent to fill the sliding channel 42 from wall to wall.

As soon as the group of products 100 leaves the chute 45, the group 100 arrives above the hump 47, while a rod 44 comes close, positions itself just above the hump 47 and drives the group 100 in the direction of forward motion y, making it come down off the hump 47 to be inserted into the sliding channel 42, until the feeding position 41 is reached.

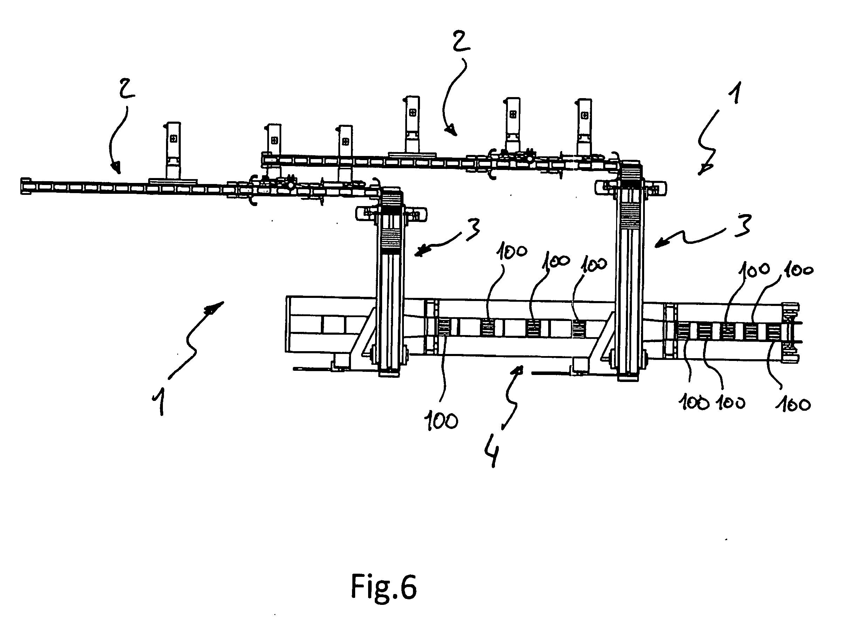

In figure 6 it is possible to see a packaging plant comprising two apparatuses of the type described above, and claimed in the claims, that feed a single second transportation line 4 towards a single packaging machine (not shown). Each of the two apparatuses is fed by means of its own separate first transportation line 2, the two lines being arranged parallel to one another. In the same way, each of the two apparatuses comprises its own loading and inverting station 3 comprising the paddle conveyors.

In this case, the second transportation line, which is the only one, has two unloading positions, and it is fed in succession by a group of products 100 coming from each loading and inverting station.

Of course, it is possible to have multiple first transportation lines that feed a respective loading and inverting station that in turn unloads the groups of products in succession to a single second transportation line that feeds the groups of products 100 to the packaging machine.

Operatively, the apparatus 1 described above allows groups 100 of products 100a to be fed to a packaging machine according to the following method.

Firstly, the products 100a are lined up arranged horizontally in succession on the first transportation line 2, in particular on the first conveyor belt 2a.

In this specific case, these products 100a can arrive directly from a baking oven and be arranged on the initial conveyor belt 2a by means of known automated machinery; indicatively, the number of products 100a processed is about 650 per minute and they move at a speed of between 36 and 70 m/min.

A subsequent step consists of bringing said products 100a to the pick-up position 21. In the course of this step it is possible to check, by means of the aforementioned sensor devices 22a, 22b, that the products 100a are correctly aligned on the first transportation line 2, carrying out possible correction manoeuvres by means of the blowing devices 23a, 23b.

The deviator device 24, on the other hand, intervenes in cases where the successive transportation stations are halted.

The first paddle conveyor 3a of the first pair of conveyors 3a, 3b fixed to the first drive belt 31a has one of its paddles 30a in the pick-up position 21 to receive the first product 100a. In particular, it is brought into the pick-up position 21 by placing the first paddle 30a in horizontal position coplanar to the first transportation line 2, so as to receive the first product 100a that is then located between the first paddle 30a on which it rests with the horizontal face and the subsequent second paddle 30a of the paddle conveyor 3a.

When the first product 100a is received on the first paddle 30a, the paddle conveyor 3a proceeds without ever stopping its passage along the descending section 35c, placing the second paddle 30a in a horizontal position coplanar to the first transportation line 2, so as to receive the second product 100a that is then located between the second paddle 30a on which its rests with the horizontal face and the subsequent third paddle 30a of the paddle conveyor 3a.

When the second product 100a of the group 100 is received on the second paddle 30a, the paddle conveyor 3a proceeds along the descending section 35c, placing the remaining paddles 30a, with the exception of the last, in succession to receive the product 100a as stated above.

The forward motion of the conveyor 3a fixed on the first drive belt 31a occurs by means of the first motor 34a, which receives the information of whether or not the product 100a is correctly received on the paddle 30a from the third sensor device 22c.

At the end of the loading, the paddle conveyor 3a moves forward along the lower horizontal section 35d, after having undergone the 90° rotation so as to place the products 100a with the vertical face close to the ascending section 35a until the unloading position 40 is reached.

Once unloading has been carried out, the paddle conveyor 3a rises up the ascending section 35a until the upper horizontal section 35b is reached and, once rotated by 90°, it crosses the entire upper horizontal section 35b to then begin to pass along the descending section 35c where, once it reaches the pick-up position 21, it begins a new load of products 100a.

In the presence of two pairs of paddle conveyors, operations occur with a certain degree of synchrony, described hereafter.

During the loading of the first paddle conveyor 3a of the first pair of paddle conveyors 3a, 3b with the products 100a, the second paddle conveyor 3b' of the second pair of paddle conveyors 3a', 3b' fixed to the second drive belt 31b, actuated by the second motor 34b, is located in the unloading position 40 with the group of products 100 that is sent to the second transportation line 4.

When the first paddle conveyor 3a of the first pair of paddle conveyors 3a, 3b goes towards the unloading area 40 with its load of products 100a, the second paddle conveyor 3b' of the second pair of paddle conveyors 3a', 3b' leaves the unloading area 40, to make it available to the first paddle conveyor 3a of the first pair of paddle conveyors 3a, 3b, positioning itself along the ascending section 35a.

At the same time, the second paddle conveyor 3b of the first pair of paddle conveyors 3a, 3b fixed to the second drive belt 31b receives in succession, in the same way as stated above, the products 100a to form the group of products 100.

During the loading of the second paddle conveyor 3b of the first pair of paddle conveyors 3a, 3b with the products 100a, the first paddle conveyor 3a of the first pair of paddle conveyors 3a, 3b fixed to the first drive belt 31a, actuated by the first motor 34a, is located in the unloading position 40 with the group of products 100 that is sent to the second transportation line 4.

When the second paddle conveyor 3b of the first pair of paddle conveyors 3a, 3b goes towards the unloading area 40 with its load of products 100a, the first paddle conveyor 3a of the first pair of paddle conveyors 3a, 3b leaves the unloading area 40, to make it available to the second paddle conveyor 3b of the first pair of paddle conveyors 3a, 3b, positioning itself along the ascending section 35a.

At the same time, the first paddle conveyor 3a' of the second pair of paddle conveyors 3a', 3b' fixed to the first drive belt 31a receives in succession, in the same way as stated above, the products 100a to form the group of products 100.

During the loading of the first paddle conveyor 3a' of the second pair of paddle conveyors 3a', 3b' with the products 100a, the second paddle conveyor 3b of the first pair of paddle conveyors 3a, 3b fixed to the second drive belt 31b, actuated by the second motor 34a, is located in the unloading position 40 with the group of products 100 that is sent to the second transportation line 4.

When the first paddle conveyor 3a' of the second pair of paddle conveyors 3a', 3b' goes towards the unloading area 40 with its load of products 100a, the second paddle conveyor 3b of the first pair of paddle conveyors 3a, 3b, leaves the unloading area 40, to make it available to the first paddle conveyor 3a' of the second pair of paddle conveyors 3a', 3b', positioning itself along the ascending section 35a.

In practice, the first conveyor 3a, 3a' of the first and second pair of paddle conveyors are fixed to the same first drive belt 31a, while the second conveyor 3b, 3b' of the first and of the second pair of conveyors are fixed to the same second drive belt 31b.

The actuation of the two drive belts 31a, 31 b is controlled by a control system that in accordance with the availability of the product 100a in the pick-up area 21, sets the speed of forward motion of each of them in an autonomous manner.

When the paddle conveyor is in the unloading position, the group of products 100 is extracted from the comb thruster 37 and made to slide along the sliding plane 45 until it reaches the second transportation line 4.

During these last steps, the products 100a are arranged vertically with the faces brought together to form a compact group resting on their sides.

This group 100 is then transported up to the feeding position 41 for subsequent packaging.

Of course, the control system that manages the speed of forward motion of each drive belt 31a, 31b, also manages the speed of forward motion of the moving belts 46 on which the rods 44 that make the groups of products 100 advance along the sliding channel 42 of the second transportation line 4 are fixed.

The method outlined above applies analogously to the operation of the apparatuses 1 when they are part of a packaging plant like the one represented in figure 6 and claimed in the claims; in this case, the final transportation step uses the same second transportation line 4 to move the groups 100 coming from the different apparatuses 1 arranged in parallel, in the illustrated example two in number, but there can also be more.

In the presence of several loading and inverting stations 3 that feed a single second transportation line 4, it is important that the chute 45 does not interfere with the groups of product 100 coming from behind. In those cases the hump 47 is also of a certain importance, because on the one hand it slows down the advancement of the groups of products 100 that are already travelling along the sliding channel 42 and on the other hand it reduces the jump of the group of products 100 coming directly from the chute 45.

As can be appreciated from what has been described, the method and the apparatus 1 according to the present invention make it possible to satisfy the requirements and to overcome the drawbacks mentioned in the introductory part of the present description with reference to the prior art.

Of course, a person skilled in the art can apply numerous modifications and variations to the apparatus and method described above, in order to satisfy contingent and specific requirements, all of which are in any case covered by the scope of protection of the invention, as defined by the following claims.

## Claims

1. Apparatus (1) for feeding groups (100) of thin-shaped food products (100a) to a packaging machine, comprising:
a plurality of first transportation lines (2) arranged to line up the horizontally arranged thin-shaped food products (100a) in a plurality of parallel rows;
a loading and inverting station (3) of the thin-shaped food products (100a) for each first transportation line (2), each loading and inverting station (3) comprising: at least one paddle conveyor (3a, 3b, 3a', 3b') comprising a predetermined number of paddles (30a, 30b, 30a', 30b') arranged in succession and spaced apart so as to be able to receive a single thin-shaped food product (100a) on each paddle;
said paddle conveyor (3a, 3b, 3a', 3b') being arranged downstream of the first transportation line (2) and actuated so as to be able to receive in succession the food products coming from the first transportation line (2), wherein a predetermined number of said products received on the paddle conveyor (3a, 3b, 3a', 3b') forms a group of products (100);
wherein the paddle conveyor (3a, 3b, 3a', 3b') is guided along a closed path configured so that the paddle conveyor (3a, 3b, 3a', 3b') overturns when it reaches an unloading position (40);
extraction means (37) of the group of products arranged so as to extract the group of products (100) from the paddle conveyor (3a, 3b, 3a', 3b') when the paddle conveyor (3a, 3b, 3a', 3b') is in the unloading position (40);
a common second transportation line (4) arranged to carry said group of products (100) extracted by the extraction means (37) from each paddle conveyor (3a, 3b, 3a', 3b') at the unloading position (40) to a feeding position (41) towards the packaging machine;
wherein the plurality of first transportation lines (2) are arranged in parallel to each other, the common second transportation line (4) being parallel to the plurality of first transportation lines (2), and
wherein each loading and inverting station (3) comprises drive belts (31a, 31b) which are tensioned between an upstream end close to the corresponding first transportation line (2) and a downstream end close to the common second transportation line (4), in a forward direction that is perpendicular to the directions of forward motion of the first and second transportation lines (2, 4), the common second transportation line (4) being fed in succession by a group of products (100) coming from each loading and inverting station (3).

2. Apparatus according to claim 1, wherein the paddle conveyor (3a, 3b, 3a', 3b') is associated with the drive belt (31a, 31b) the path of which is closed and it comprises an ascending section (35a), an upper horizontal section (35b), a descending section (35c) and a lower horizontal section (35d), said unloading position (40) being reached when the paddle conveyor (3a, 3b, 3a', 3b') is located along said lower horizontal section (35d).

3. Apparatus (1) according to claim 2, comprising retaining means (39) arranged so as to prevent the group of products (100) carried by the paddle conveyor (3a, 3b, 3a', 3b') from falling, when the latter travels along the descending section (35c) and the lower horizontal section (35d).

4. Apparatus according to any one of the previous claims, comprising stop means (36) arranged downstream of the first transportation line (2) at the area in which the paddle conveyor (3a, 3b, 3a', 3b')is located when it receives the food products coming from the first transportation line (2), so as to stop the products (100a) on the paddle conveyor (3a, 3b, 3a', 3b').

5. Apparatus according to claim 3, wherein each paddle (30a, 30b, 30a', 30b') is fixed to the drive belt (31a,31b) so as to be able to oscillate autonomously with respect to the remaining paddles of the paddle conveyor (3a, 3b, 3a', 3b'), said autonomous oscillation occurring with respect to an axis arranged in the point of attachment to the belt (31a,31b), parallel to the direction of forward movement of the products along the first transportation line (2).

6. Apparatus according to any one of the previous claims, comprising at least one pair of said paddle conveyor (3a, 3b, 3a', 3b'), a first paddle conveyor (3a, 3a') of said pair being associated with a first drive belt (31a) and at least one second paddle conveyor (3b, 3b') of said pair being associated with a second drive belt (31b), said drive belts (31a, 31 b) being parallel and able to be actuated separately.

7. Apparatus according to any one of the previous claims, wherein said extraction means (37) comprise a comb thruster arranged at the second transportation line (4) so as to extract the group of products (100) from the paddle conveyor (3a, 3b, 3a', 3b'), each tooth of said comb thruster being arranged between two consecutive paddles (30a, 30b, 30a', 30b') when it is in the product extraction step.

8. Apparatus according to claim 7, comprising a sliding plane (45) arranged to guide the falling of the group of food products (100) on the second transportation line (4) when they are extracted by the comb thruster, said sliding plane (45) being arranged in the unloading position (40).

9. Apparatus according to claim 8, wherein said sliding plane (45) is provided with a pair of side walls (48) arranged with a predetermined distance between them, so as to prevent the tipping of the products forming the group of products that is extracted by the comb thruster.

10. Apparatus (1) according to one of the previous claims, wherein said second transportation line (4) comprises a plurality of driving rods (44) arranged parallel to one another and actuated in a direction perpendicular to the longitudinal axis of the rods, to thrust each group of products (100) along a sliding channel (42) towards the packaging machine.

11. Method for feeding a group (100) of thin-shaped food products (100a) to a packaging machine, comprising the steps of:
providing a plurality of thin-shaped food products (100a);
providing a plurality of first transportation lines (2);
lining up the thin-shaped food products (100a) arranged horizontally on the plurality of first transportation lines (2) and thereby forming a plurality of rows;
transporting the thin-shaped food products (100a) aligned with one another to advance along a direction (x) parallel to the longitudinal extension of the products (100a) for each row, said plurality of first transportation lines (2) forward moving in parallel to each other;
providing a loading and inverting station (3) of the thin-shaped food products (100a) for each first transportation line (2), each loading and inverting station (3) comprising: a paddle conveyor (3a, 3b, 3a', 3b') comprising a predetermined number of paddles (30a, 30b, 30a', 30b') arranged in succession and spaced apart, said paddle conveyor (3a, 3b, 3a', 3b')being arranged downstream of each first transportation line (2);
feeding a single thin-shaped food product (100a) at a time in horizontal position onto each paddle (30a, 30b, 30a', 30b'), while the paddle conveyor (3a, 3b, 3a', 3b') advances in a direction perpendicular to that of forward motion of the first transportation line (2), the paddle conveyor (3a, 3b, 3a', 3b') being able to receive a predetermined number of products that form a group of products (100);
guiding the paddle conveyor (3a, 3b, 3a', 3b') loaded with the group of products (100) along a closed path in which the paddle conveyor (3a, 3b, 3a', 3b') overturns in order to place each product of the group of transported products in vertical position;
reaching an unloading position (40) with the paddle conveyor (3a, 3b, 3a', 3b') having the paddles (30a, 30b, 30a', 30b') in vertical position;
extracting the group of products in vertical position from the paddle conveyor (3a, 3b, 3a', 3b') through extraction means (37);
providing a common second transportation line (4) to take said group of products (100) extracted in succession by the extraction means (37) from the paddle conveyor of each loading and inverting station (3) to a feeding position (41) towards the packaging machine, wherein the common second transportation line (4) moves in a direction (y) which is parallel to the forward movement of the plurality of first transportation lines (2).

12. Method according to claim 11, wherein the paddle conveyor (3a, 3b, 3a', 3b')moves along a descending section (35c) as it progressively receives each product (100a), and at the end of the loading of the group of products (100), the paddle conveyor (3a, 3b, 3a', 3b') passes along a lower horizontal section (35d) arranged in tipped position with the paddles (30a, 30b, 30a', 3b') arranged vertical and each product arranged vertically between two consecutive paddles, up to the unloading position (40).

13. Method according to claim 11 or 12, wherein said products are fed in succession to a first (3a, 3a') and a second (3b, 3b') paddle conveyor, each of said first and second paddle conveyor belonging to a respective first and a second pair of paddle conveyors, the first paddle conveyors of the first pair being actuated autonomously with respect to the second paddle conveyor of the second pair.

14. Method according to claim 13, wherein while one of the first paddle conveyors (3a, 3a') of one of the two pairs is fed with the group of products, the second paddle conveyor (3b', 3b) belonging to the remaining pair is located in the unloading position and vice-versa.

## Patentansprüche

1. Vorrichtung (1) zum Zuführen von Gruppen (100) aus dünnen Nahrungsmitteln (100a) zu einer Verpackungsmaschine, aufweisend:
mehrere erste Transportlinien (2), die angeordnet sind, die horizontal angeordneten dünnen Nahrungsmittel (100a) in mehrere parallele Reihen auszurichten;
eine Lade- und Invertierungsstation (3) der dünnen Nahrungsmittel (100a) für jede erste Transportlinie (2), wobei jede Lade- und Invertierungsstation (3) aufweist: wenigstens eine Schaufelfördereinrichtung (3a, 3b, 3a', 3b'), die eine vorherbestimmte Anzahl an Schaufeln (30a, 30b, 30a', 30b') aufweist, die in Abfolge angeordnet und beabstandet sind, um so ein einzelnes dünnes Nahrungsmittel (100a) auf jeder Schaufel aufnehmen zu können;
wobei die Schaufelfördereinrichtung (3a, 3b, 3a', 3b') stromab der ersten Transportlinie (2) angeordnet ist und betrieben wird, um so in Abfolge die Nahrungsmittel aufnehmen zu können, die von der ersten Transportlinie (2) kommen, wobei eine vorherbestimmte Anzahl der auf der Schaufelfördereinrichtung (3a, 3b, 3a', 3b') aufgenommenen Nahrungsmittel eine Nahrungsmittelgruppe (100) bildet;
wobei die Schaufelfördereinrichtung (3a, 3b, 3a', 3b') entlang einer geschlossenen Bahn geführt ist, die eingerichtet ist, so dass die Schaufelfördereinrichtung (3a, 3b, 3a', 3b') überkippt, wenn sie eine Entladeposition (40) erreicht;
Entnahmemittel (37) der Nahrungsmittelgruppe, die angeordnet sind, um so die Nahrungsmittelgruppe (100) von der Schaufelfördereinrichtung (3a, 3b, 3a', 3b') zu entnehmen, wenn sich die Schaufelfördereinrichtung (3a, 3b, 3a', 3b') in der Entladeposition (40) befindet;
eine gemeinsame zweite Transportlinie (4), die angeordnet ist, die Nahrungsmittelgruppe (100), die von den Entnahmemitteln (37) aus jeder Schaufelfördereinrichtung (3a, 3b, 3a', 3b') an der Entladeposition (40) entnommen wurde, zu einer Zuführungsposition (41) in Richtung der Verpackungsmaschine zu transportieren;
wobei die mehreren ersten Transportlinien (2) parallel zueinander angeordnet sind, die gemeinsame zweite Transportlinie (4) parallel zu den mehreren ersten Transportlinien (2) ist und
wobei jede Lade- und Invertierungsstation (3) Antriebsriemen (31a, 31b) aufweist, die zwischen einem stromaufwärtigen Ende nahe der korrespondierenden ersten Transportlinie (2) und einem stromabwärtigen Ende nahe der gemeinsamen zweiten Transportlinie (4) gespannt sind in einer Vorwärtsrichtung, die rechtwinklig ist zu den Richtungen der Vorwärtsbewegung der ersten und zweiten Transportlinien (2, 4), wobei die gemeinsame zweite Transportlinie (4) in Abfolge mit einer Nahrungsmittelgruppe (100) beschickt wird, die von jeder Lade- und Invertierungsstation (3) kommt.

2. Vorrichtung nach Anspruch 1, wobei die Schaufelfördereinrichtung (3a, 3b, 3a', 3b') mit dem Antriebsriemen (31a, 31b) assoziiert ist, dessen Bahn geschlossen ist, und die einen aufsteigenden Abschnitt (35a), einen oberen horizontalen Abschnitt (35b), einen absteigenden Abschnitt (35c) und einen unteren horizontalen Abschnitt (35d) aufweist, wobei die Entladeposition (40) erreicht ist, wenn sich die Schaufelfördereinrichtung (3a, 3b, 3a', 3b') entlang des unteren horizontalen Abschnitts (35d) befindet.

3. Vorrichtung (1) nach Anspruch 2, aufweisend Haltemittel (39), die angeordnet sind, um so zu verhindern, dass die Nahrungsmittelgruppe (100), die von der Schaufelfördereinrichtung (3a, 3b, 3a', 3b') transportiert wird, fällt, wenn die Letztere entlang des absteigenden Abschnitts (35c) und des unteren horizontalen Abschnitt (35d) läuft.

4. Vorrichtung nach einem der vorhergehenden Ansprüche, aufweisend Anhaltemittel (36), die stromab der ersten Transportlinie (2) in dem Bereich angeordnet sind, in dem sich die Schaufelfördereinrichtung (3a, 3b, 3a', 3b') befindet, wenn sie die Nahrungsmittel aufnimmt, die von der ersten Transportlinie (2) kommen, um so die Nahrungsmittel (100a) an der Schaufelfördereinrichtung (3a, 3b, 3a', 3b') anzuhalten.

5. Vorrichtung nach Anspruch 3, wobei jede Schaufel (30a, 30b, 30a', 30b') an dem Antriebsriemen (31a, 31b) befestigt ist, um so autonom in Bezug auf die übrigen Schaufeln der Schaufelfördereinrichtung (3a, 3b, 3a', 3b') schwingen zu können, wobei die autonome Schwingung in Bezug auf eine Achse auftritt, die in dem Befestigungspunkt an dem Riemen (31a, 31b) angeordnet ist, parallel zu der Richtung der Vorwärtsbewegung der Nahrungsmittel entlang der ersten Transportlinie (2).

6. Vorrichtung nach einem der vorhergehenden Ansprüche, aufweisend wenigstens ein Paar der Schaufelfördereinrichtung (3a, 3b, 3a', 3b'), wobei eine erste Schaufelfördereinrichtung (3a, 3a') des Paars mit einem ersten Antriebsriemen (31a) assoziiert ist und wenigstens eine zweite Schaufelfördereinrichtung (3b, 3b') des Paars mit einem zweiten Antriebsriemen (31b) assoziiert ist, wobei die Antriebsriemen (31a, 31b) parallel sind und separat betrieben werden können.

7. Vorrichtung nach einem der vorhergehenden Ansprüche, wobei die Entnahmemittel (37) einen Kammstoßer aufweisen, der an der zweiten Transportlinie (4) angeordnet ist, um so die Nahrungsmittelgruppe (100) von der Schaufelfördereinrichtung (3a, 3b, 3a', 3b') zu entnehmen, wobei jeder Zahn des Kammstoßers zwischen zwei aufeinanderfolgenden Schaufeln (30a, 30b, 30a', 30b') angeordnet ist, wenn er sich in dem Nahrungsmittelentnahmeschritt befindet.

8. Vorrichtung nach Anspruch 7, aufweisend eine Gleitebene (45), die angeordnet ist, das Fallen der Nahrungsmittelgruppe (100) auf die zweite Transportlinie (4) zu führen, wenn sie von dem Kammstoßer entnommen werden, wobei die Gleitebene (45) in der Entladeposition (40) angeordnet ist.

9. Vorrichtung nach Anspruch 8, wobei die Gleitebene (45) mit einem Paar Seitenwänden (48) versehen ist, die mit einem vorherbestimmten Abstand zwischen ihnen angeordnet sind, um so das Umkippen der Nahrungsmittel zu verhindern, die die Nahrungsmittelgruppe bilden, die von dem Kammstoßer entnommen wird.

10. Vorrichtung (1) nach einem der vorhergehenden Ansprüche, wobei die zweite Transportlinie (4) mehrere Antriebsstangen (44) aufweist, die parallel zueinander angeordnet sind und in einer Richtung rechtwinklig zu der Längsachse der Stangen betrieben werden, um jede Nahrungsmittelgruppe (100) entlang eines Gleitkanals (42) in Richtung der Verpackungsmaschine zu schieben.

11. Verfahren zum Zuführen einer Gruppe (100) aus dünnen Nahrungsmitteln (100a) zu einer Verpackungsmaschine, aufweisend die Schritte:
Bereitstellen mehrerer dünner Nahrungsmittel (100a);
Bereitstellen mehrerer erster Transportlinien (2);
Ausrichten der dünnen Nahrungsmittel (100a), die horizontal auf den mehreren Transportlinien (2) angeordnet sind und dadurch mehrere Reihen bilden;
Transportieren der dünnen Nahrungsmittel (100a), die zueinander ausgerichtet sind, um sich entlang einer Richtung (x) parallel zu der Längserstreckung der Nahrungsmittel (100a) für jede Reihe vorwärtszubewegen, wobei sich die mehreren ersten Transportlinien (2) parallel zueinander vorwärts bewegen;
Bereitstellen einer Lade- und Invertierungsstation (3) der dünnen Nahrungsmittel (100a) für jede erste Transportlinie (2), wobei jede Lade- und Invertierungsstation (3) aufweist: eine Schaufelfördereinrichtung (3a, 3b, 3a', 3b'), die eine vorherbestimmte Anzahl an Schaufeln (30a, 30b, 30a', 30b') aufweist, die in Abfolge angeordnet und beabstandet sind, wobei die Schaufelfördereinrichtung (3a, 3b, 3a', 3b') stromab jeder ersten Transportlinie (2) angeordnet ist;
Beschicken jeweils eines einzelnen dünnen Nahrungsmittels (100a) in horizontaler Position auf jede Schaufel (30a, 30b, 30a', 30b'), während sich die Schaufelfördereinrichtung (3a, 3b, 3a', 3b') in einer Richtung rechtwinklig zur Vorwärtsbewegung der ersten Transportlinie (2) vorwärtsbewegt, wobei die Schaufelfördereinrichtung (3a, 3b, 3a', 3b') eine vorherbestimmte Anzahl an Nahrungsmitteln aufnehmen kann, die eine Nahrungsmittelgruppe (100) bildet;
Führen der Schaufelfördereinrichtung (3a, 3b, 3a', 3b'), die mit der Nahrungsmittelgruppe (100) beladen ist, entlang einer geschlossenen Bahn, auf der die Schaufelfördereinrichtung (3a, 3b, 3a', 3b') überkippt, um jedes Nahrungsmittel der transportierten Nahrungsmittelgruppe in eine vertikale Position zu platzieren;
Erreichen einer Entladeposition (40), wobei die Schaufelfördereinrichtung (3a, 3b, 3a', 3b') die Schaufeln (30a, 30b, 30a', 30b') in einer vertikalen Position aufweist;
Entnehmen der Nahrungsmittelgruppe in vertikaler Position von der Schaufelfördereinrichtung (3a, 3b, 3a', 3b') durch Entnahmemittel (37);
Bereitstellen einer gemeinsamen zweiten Transportlinie (4), um die Nahrungsmittelgruppe (100), die in Abfolge durch die Entnahmemittel (37) von der Schaufelfördereinrichtung jeder Lade- und Invertierungsstation (3) entnommen werden, zu einer Zuführungsposition (41) in Richtung der Verpackungsmaschine zu nehmen, wobei sich die gemeinsame zweite Transportlinie (4) in eine Richtung (y) bewegt, die parallel zu der Vorwärtsbewegung der mehreren ersten Transportlinien (2) ist.

12. Verfahren nach Anspruch 11, wobei sich die Schaufelfördereinrichtung (3a, 3b, 3a', 3b') entlang eines absteigenden Abschnitts (35c) bewegt, während sie stufenweise jedes Nahrungsmittel (100a) aufnimmt, und am Ende des Ladens der Nahrungsmittelgruppe (100) die Schaufelfördereinrichtung (3a, 3b, 3a', 3b') entlang eines unteren horizontalen Abschnitts (35d) läuft, der in einer gekippten Position angeordnet ist, wobei die Schaufeln (30a, 30b, 30a', 30b') vertikal angeordnet sind und jedes Nahrungsmittel zwischen zwei aufeinanderfolgenden Schaufeln vertikal angeordnet ist, bis zu der Entladeposition (40).

13. Verfahren nach Anspruch 11 oder 12, wobei die Nahrungsmittel in Abfolge einer ersten (3a, 3a') und einer zweiten (3b, 3b') Schaufelfördereinrichtung zugeführt werden, wobei jede der ersten und zweiten Schaufelfördereinrichtungen zu einem jeweiligen ersten und einem zweiten Paar Schaufelfördereinrichtungen gehören, wobei die ersten Schaufelfördereinrichtungen des ersten Paars autonom in Bezug auf die zweite Schaufelfördereinrichtung des zweiten Paars betrieben werden.

14. Verfahren nach Anspruch 13, wobei, während eine der ersten Schaufelfördereinrichtungen (3a, 3a') eines der zwei Paare mit der Nahrungsmittelgruppe beschickt wird, sich die zweite Schaufelfördereinrichtung (3b', 3b), die zu dem verbleibenden Paar gehört, in der Entladeposition befindet und umgekehrt.

## Revendications

1. Appareil (1) pour amener des groupes (100) de produits alimentaires de forme mince (100a) à une machine d'emballage, comprenant :
une pluralité de premières lignes de transport (2) agencées pour aligner les produits alimentaires de forme mince (100a) agencés horizontalement dans une pluralité de rangées parallèles ;
une station de chargement et d'inversion (3) de produits alimentaires de forme mince (100a) pour chaque première ligne de transport (2), chaque station de chargement et d'inversion (3) comprenant : au moins un transporteur à palettes (3a, 3b, 3a', 3b') comprenant un nombre prédéterminé de palettes (30a, 30b, 30a', 30b') agencées en succession et espacées afin de pouvoir recevoir une seul produit alimentaire de forme mince (100a) sur chaque palette ;
ledit transporteur à palettes (3a, 3b, 3a', 3b') étant agencé en aval de la première ligne de transport (2) et actionné afin de pouvoir recevoir en succession les produits alimentaires provenant de la première ligne de transport (2), dans lequel un nombre prédéterminé desdits produits reçus sur le transporteur à palettes (3a, 3b, 3a', 3b') forme un groupe de produits (100) ;
dans lequel le transporteur à palettes (3a, 3b, 3a', 3b') est guidé le long d'une trajectoire fermée configurée de sorte que le transporteur à palettes (3a, 3b, 3a', 3b') se renverse lorsqu'il atteint une position de déchargement (40) ;
des moyens d'extraction (37) du groupe de produits agencés pour extraire le groupe de produits (100) du transporteur à palettes (3a, 3b, 3a', 3b') lorsque le transporteur à palettes (3a, 3b, 3a', 3b') est dans la position de déchargement (40) ;
une seconde ligne de transport commune (4) agencée pour transporter ledit groupe de produits (100) extrait par les moyens d'extraction (37) de chaque transporteur à palettes (3a, 3b, 3a', 3b') dans la position de déchargement (40) jusqu'à une position d'alimentation (41) vers la machine d'emballage ;
dans lequel la pluralité de premières lignes de transport (2) sont agencées en parallèle entre elles, la seconde ligne de transport commune (4) étant parallèle à la pluralité de premières lignes de transport (2), et
dans lequel chaque station de chargement et d'inversion (3) comprend des courroies d'entraînement (31 a, 31 b) qui sont tendues entre une extrémité en amont à proximité de la première ligne de transport (2) correspondante et une extrémité en aval à proximité de la seconde ligne de transport commune (4), dans une direction vers l'avant qui est perpendiculaire aux directions de déplacement vers l'avant des première et seconde lignes de transport (2, 4), la seconde ligne de transport commune (4) étant alimentée en succession par un groupe de produits (100) provenant de chaque station de chargement et d'inversion (3).

2. Appareil selon la revendication 1, dans lequel le transporteur à palettes (3a, 3b, 3a', 3b') est associé à la courroie d'entraînement (31 a, 31 b) dont la trajectoire est fermée et il comprend une section ascendante (35a), une section horizontale supérieure (35b), une section descendante (35c) et une section horizontale inférieure (35d), ladite position de déchargement (40) étant atteinte lorsque le transporteur à palettes (3a, 3b, 3a', 3b') est positionné le long de ladite section horizontale inférieure (35d).

3. Appareil (1) selon la revendication 2, comprenant des moyens de retenue (39) agencés afin d'empêcher le groupe de produits (100) transporté par le transporteur à palettes (3a, 3b, 3a', 3b') de tomber, lorsque ce dernier se déplace le long de la section descendante (35c) et de la section horizontale inférieure (35d).

4. Appareil selon l'une quelconque des revendications précédentes, comprenant des moyens d'arrêt (36) agencés en aval de la première ligne de transport (2) au niveau de la zone dans laquelle le transporteur à palettes (3a, 3b, 3a', 3b') est positionné lorsqu'il reçoit les produits alimentaires provenant de la première ligne de transport (2), afin d'arrêter les produits (100a) sur le transporteur à palettes (3a, 3b, 3a', 3b').

5. Appareil selon la revendication 3, dans lequel chaque palette (30a, 30b, 30a', 30b') est fixée à la courroie d'entraînement (31 a, 31 b) afin de pouvoir osciller de manière autonome par rapport aux palettes résiduelles du transporteur à palettes (3a, 3b, 3a', 3b'), ladite oscillation autonome ayant lieu par rapport à un axe agencé dans le point de fixation à la courroie (31 a, 31 b), parallèle à la direction du déplacement vers l'avant des produits le long de la première ligne de transport (2).

6. Appareil selon l'une quelconque des revendications précédentes, comprenant au moins une paire desdits transporteurs à palettes (3a, 3b, 3a', 3b'), un premier transporteur à palettes (3a, 3a') de ladite paire étant associé à une première courroie d'entraînement (31a) et au moins un second transporteur à palettes (3b, 3b') de ladite paire étant associé à une seconde courroie d'entraînement (31 b), lesdites courroies d'entraînement (31 a, 31 b) étant parallèles et pouvant être actionnées séparément.

7. Appareil selon l'une quelconque des revendications précédentes, dans lequel lesdits moyens d'extraction (37) comprennent un propulseur à peigne agencé au niveau de la seconde ligne de transport (4) afin d'extraire le groupe de produits (100) du transporteur à palettes (3a, 3b, 3a', 3b'), chaque dent dudit propulseur à peigne étant agencée entre deux palettes (30a, 30b, 30a', 30b') consécutives lorsqu'il est à l'étape d'extraction de produits.

8. Appareil selon la revendication 7, comprenant un plan de glissement (45) agencé pour guider la chute du groupe de produits alimentaires (100) sur la seconde ligne de transport (4) lorsqu'ils sont extraits par le propulseur à peigne, ledit plan de glissement (45) étant agencé dans la position de déchargement (40).

9. Appareil selon la revendication 8, dans lequel ledit plan de glissement (45) est prévu avec une paire de parois latérales (48) agencées avec une distance prédéterminée entre elles, afin d'empêcher le retournement des produits formant le groupe de produits qui est extrait par le propulseur à peigne.

10. Appareil (1) selon l'une des revendications précédentes, dans lequel ladite seconde ligne de transport (4) comprend une pluralité de tiges d'entraînement (44) agencées parallèlement entre elles et actionnées dans une direction perpendiculaire à l'axe longitudinal des tiges, afin de pousser chaque groupe de produits (100) le long d'un canal de glissement (42) vers la machine d'emballage.

11. Procédé pour amener un groupe (100) de produits alimentaires de forme mince (100a) à une machine d'emballage, comprenant les étapes consistant à :
prévoir une pluralité de produits alimentaires de forme mince (100a) ;
prévoir une pluralité de premières lignes de transport (2) ;
aligner les produits alimentaires de forme mince (100a) agencés horizontalement sur la pluralité de premières lignes de transport (2) et formant ainsi une pluralité de rangées ;
transporter les produits alimentaires de forme mince (100a) alignés les uns par rapport aux autres pour avancer le long d'une direction (x) parallèle à l'extension longitudinale des produits (100a) pour chaque rangée, ladite pluralité de premières lignes de transport (2) se déplaçant vers l'avant parallèlement entre elles ;
prévoir une station de chargement et d'inversion (3) des produits alimentaires de forme mince (100a) pour chaque première ligne de transport (2), chaque station de chargement et d'inversion (3) comprenant : un transporteur à palettes (3a, 3b, 3a', 3b') comprenant un nombre prédéterminé de palettes (30a, 30b, 30a', 30b') agencées en succession et espacées, ledit transporteur à palettes (3a, 3b, 3a', 3b') étant agencé en aval de chaque première ligne de transport (2) ;
amener un seul produit alimentaire de forme mince (100a) à la fois dans la position horizontale sur chaque palette (30a, 30b, 30a', 30b'), alors que le transporteur à palettes (3a, 3b, 3a', 3b') avance dans une direction perpendiculaire à celle du déplacement vers l'avant de la première ligne de transport (2), le transporteur à palettes (3a, 3b, 3a', 3b') pouvant recevoir un nombre prédéterminé de produits qui forment un groupe de produits (100) ;
guider le transporteur à palettes (3a, 3b, 3a', 3b') chargé avec le groupe de produits (100) le long d'une trajectoire fermée dans laquelle le transporteur à palettes (3a, 3b, 3a', 3b') se renverse afin de placer chaque produit du groupe de produits transportés dans la position verticale ;
atteindre une position de déchargement (40) avec le transporteur à palettes (3a, 3b, 3a', 3b') ayant les palettes (30a, 30b, 30a', 30b') dans la position verticale ;
extraire le groupe de produits dans la position verticale du transporteur à palettes (3a, 3b, 3a', 3b') par le biais des moyens d'extraction (37) ;
prévoir une seconde ligne de transport commune (4) pour prendre ledit groupe de produits (100) extraits en succession par les moyens d'extraction (37) du transporteur à palettes de chaque station de chargement et d'inversion (3) jusqu'à une position d'alimentation (41) vers la machine d'emballage, dans lequel la seconde ligne de transport commune (4) se déplace dans une direction (y) qui est parallèle au déplacement vers l'avant de la pluralité de premières lignes de transport (2).

12. Procédé selon la revendication 11, dans lequel le transporteur à palettes (3a, 3b, 3a', 3b') se déplace le long d'une section descendante (35c) au fur et à mesure qu'il reçoit progressivement chaque produit (100a) et à la fin du chargement du groupe de produits (100), le transporteur à palettes (3a, 3b, 3a', 3b') passe le long d'une section horizontale inférieure (35d) agencée dans une position retournée avec les palettes (30a, 30b, 30a', 30b') agencées verticalement et chaque produit agencé verticalement entre deux palettes consécutives, jusqu'à la position de déchargement (40).

13. Procédé selon la revendication 11 ou 12, dans lequel lesdits produits sont amenés en succession à un premier (3a, 3a') et un second (3b, 3b') transporteur à palettes, chacun desdits premier et second transporteurs à palettes appartenant à une première et à une seconde paire respective de transporteurs à palettes, les premiers transporteurs à palettes de la première paire étant actionnés de manière autonome par rapport au second transporteur à palettes de la seconde paire.

14. Procédé selon la revendication 13, dans lequel alors que l'un des premiers transporteurs à palettes (3a, 3a') de l'une des deux paires est alimenté avec le groupe de produits, le second transporteur à palettes (3b', 3b) appartenant à la paire résiduelle est positionné dans la position de déchargement et vice-versa.
